**Europäisches Patentamt**

**European Patent Office**

**Office européen des brevets**

(19)

(11) Veröffentlichungsnummer : **0 395 791 B1**

(12) # EUROPÄISCHE PATENTSCHRIFT

(45) Veröffentlichungstag der Patentschrift :
16.09.92 Patentblatt 92/38

(51) Int. Cl.$^5$ : **B23B 31/12**

(21) Anmeldenummer : **89112817.5**

(22) Anmeldetag : **13.07.89**

(54) **Nachspannendes Bohrfutter.**

(30) Priorität : **29.04.89 DE 3914311**

(43) Veröffentlichungstag der Anmeldung :
**07.11.90 Patentblatt 90/45**

(45) Bekanntmachung des Hinweises auf die
Patenterteilung :
**16.09.92 Patentblatt 92/38**

(84) Benannte Vertragsstaaten :
**CH FR GB IT LI SE**

(56) Entgegenhaltungen :
**EP-A- 0 108 411**
**EP-A- 0 302 992**

(73) Patentinhaber : **Röhm, Günter Horst**
**Heinrich-Röhm-Strasse 50**
**W-7927 Sontheim (DE)**

(72) Erfinder : **Röhm, Günter Horst**
**Heinrich-Röhm-Strasse 50**
**W-7927 Sontheim (DE)**

(74) Vertreter : **Fay, Hermann, Dipl.-Phys. Dr.**
**Dipl.-Phys. Hermann Fay und Dr. Joachim**
**Dziewior Ensingerstrasse 21 Postfach 17 67**
**W-7900 Ulm/Donau (DE)**

EP 0 395 791 B1

Jouve, 18, rue Saint-Denis, 75001 PARIS

# EP 0 395 791 B1

**Beschreibung**

Die Erfindung betrifft ein nachspannendes Bohrfutter mit einem zum Anschluß an eine Bohrspindel, insbesondere Hammerbohrspindel, eingerichteten, ein Spanngewinde aufweisenden Futterkörper, einer am Futterkörper drehbar geführten Spannhülse, ferner mit im Bohrfutter axial abgestützten Spannbacken, die zwischen sich eine mit der Futterachse koaxiale Aufnahme für den Werkzeugschaft bilden und an der Spannhülse schräg zur Futterachse verschiebbar geführt sind, so daß sie sich bei ihrer Verschiebung auch radial zur Futterachse verstellen und den Durchmesser der Aufnahme für den Werkzeugschaft verändern, mit einem Sperring, der am Futterkörper jeweils zwischen zwei Endstellungen in Umfangsrichtung verdrehbar und axial verschiebbar und mit der Spannhülse in Umfangsrichtung über zwei Zahnkränze kuppelbar ist, die in der dem eingekuppelten Zustand entsprechenden axialen Endstellung des Sperrings miteinander im Eingriff stehen, und mit einem zur Drehbegrenzung des Sperrings gegenüber dem Futterkörper in einem dieser beiden Teile angeordneten radial abstehenden Anschlagstift, der in eine im anderen Teil vorgesehene Ausnehmung greift, die in Umfangsrichtung größer als die Dicke des Anschlagstiftes ist und deren Enden in Umfangsrichtung Anschlagflächen für den Anschlagstift bilden.

Bohrfutter dieser Art, bei welchen die Drehbegrenzung des Sperrings eine entsprechende Begrenzung der Nachspannwirkung ergibt, sind aus EP 0 302 992 A1 und, mit allerdings etwas anderer Anordnung des Anschlagstiftes, aus DE 34 32 918 A1 bekannt. Dabei können die Spannbacken unmittelbar am Spanngewinde abgestützt sein, wozu das Spanngewinde an jeder Spannbacke mit einer Querverzahnung im Eingriff steht, die sich an der Spannbacke parallel zu ihrer Führungsrichtung erstreckt (EP 0 302 992 A1). Oder die Spannbacken sind außer an der Spannhülse auch radial an einem ihre axiale Lage im Bohrfutter bestimmenden drehbaren Druckstück geführt, wobei die Spannhülse oder das Druckstück im Spanngewinde verdrehbar ist (DE 34 32 918 A1). In beiden Fällen wird der Sperring durch eine Feder oder einen Rastsitz in seiner dem eingekuppelten Zustand entsprechenden axialen Endstellung gehalten, wobei seine axiale Verschiebung in diese Endstellung in jeder Drehstellung des Sperrings längs seines durch die Ausnehmung begrenzten Drehwegs möglich ist. Beim Einsetzen des Bohrwerkzeugs in die Aufnahme des Bohrfutters wird der Sperring von Hand oder durch einen zweiten Rastsitz in der dem ausgekuppelten Zustand entsprechenden axialen Endstellung gehalten, so daß die Spannhülse frei verdreht werden kann und dadurch die Spannbacken auf den Durchmesser des Werkzeugschaftes eingestellt werden können. Erst dann wird der Sperring in die dem eingekuppelten Zustand entsprechende axiale Endstellung verschoben, wobei dies aber bei den bekannten Bohrfuttern in Drehstellungen des Sperrings erfolgen kann, die nicht dem Anfang des durch die Ausnehmung an sich ermöglichten Drehweges des Sperrings entsprechen, so daß dieser Drehweg auch nicht mehr in seiner durch die Ausnehmung bestimmten vollen Drehlänge für die Nachspannung zur Verfügung steht. Eine entsprechende Verrringerung oder sogar Verhinderung der Nachspannung ist die Folge. Diese Gefahr ist dann besonders groß, wenn der Sperring, wie bei dem aus DE 34 32 918 A1 bekannten Bohrfuttern, in der nachspannenden Drehrichtung unter der Kraft einer Nachspannfeder steht, gegen die der Sperring zunächst von Hand zurückgedreht werden muß, wenn er in der dem Anfang seines Drehwegs entsprechenden Drehstellung in die dem eingekuppelten Zustand entsprechende axiale Endstellung verschoben werden soll. Aus diesem Grunde ist bei dem aus EP 0 302 992 A1 bekannten Bohrfutter auf eine solche Nachspannfeder überhaupt verzichtet und stattdessen eine Feder vorgesehen, deren Kraft den Sperring in dem dem Öffnen des Bohrfutters entsprechenden Drehsinn der Spannhülse beaufschlagt und daher den Sperring in der Anfangsstellung seines Drehweges hält, wenn er in seine dem eingekuppelten Zustand entsprechende axiale Endstellung verschoben wird. Jedoch muß dann zum Nachspannen des Bohrfutters die Kraft dieser Feder überwunden werden, was mit Problemen verbunden sein kann, wenn die beim Bohrvorgang vom Bohrwerkzeug ausgehenden, die Nachspannung bewirkenden Drehmomente nicht groß genug sind, weil beispielsweise das Bohrwerkzeug einen nur geringen Durchmesser besitzt. Auch in diesem Fall kann daher die Nachspannung ungenügend sein oder völlig fehlen.

Der Erfindung liegt die Aufgabe zugrunde, solche Beeinträchtigungen oder Behinderungen des Nachspannvorgangs auszuschließen und dazu ein nachspannendes Bohrfutter der eingangs genannten Art so auszubilden, daß beim Verschieben des Sperrings in seine dem eingekuppelten Zustand entsprechende axiale Endstellung die Drehstellung des Sperrings, in der die beiden Zahnkränze miteinander zum Eingriff kommen, immer mit dem Anfang des durch die Ausnehmung begrenzten Drehweges des Sperrings übereinstimmt, so daß dieser Drehweg für die Nachspannung auch stets voll zur Verfügung steht.

Diese Aufgabe wird bei einem Bohrfutter der eingangs genannten Art dadurch gelöst, daß der in der Ausnehmung stehende Anschlagstift durch Anschlag an den die Ausnehmung axial begrenzenden Randflächen den Sperring bei seiner Drehung in der dem eingekuppelten Zustand entsprechenden axialen Endstellung hält, und daß die Ausnehmung an ihrem in der nachspannenden Drehrichtung des Sperrings hinteren Ende mit einer axial gerichteten Mündung an eine zur Aufnahme des Anschlagstiftes eingerichtete Aussparung anschließt,

2

wobei die Mündung den axialen Übertritt des Anschlagstiftes zwischen diesem Ende der Ausnehmung und der Aussparung frei gibt und die Aussparung die axiale Verstellung des Sperrings zwischen seinen dem eingekuppelten und dem ausgekuppelten Zustand entsprechenden axialen Endstellungen ermöglicht.

Dabei kann sich der Anschlagstift wahlweise am Futterkörper oder am Sperring und die Ausnehmung bzw. Aussparung umgekehrt am Sperring oder am Futterkörper befinden. In beiden Fällen wird durch die Erfindung erreicht, daß nur dann der Anschlagstift in die Ausnehmung eintreten und dadurch der Sperring in die dem eingekuppelten Zustand entsprechende axial Endstellung verschoben werden kann, wenn der Sperring in der mit dem Anfang seines Drehweges übereinstimmenden Drehstellung steht, denn nur dann kann der Anschlagstift die Mündung zwischen der Aussparung und der Ausnehmung passieren. Im Ergebnis ermöglicht der Sperring nach seiner Einkupplung an der Spannhülse dieser immer den vollen Nachspannweg, der durch die Ausnehmung vorgegeben ist, und zwar unabhängig von dem die Nachspannung bewirkenden Aufbau des Bohrfutters, also insbesondere sowohl bei unmittelbar als auch bei über ein Druckstück mittelbar am Spanngewinde abgestützten Spannbacken.

In einer bevorzugten Ausführungsform besitzt die Aussparung sich in Umfangsrichtung gegenüber liegende Führungsflächen, die beim axialen Verstellen des Sperrings aus der dem ausgekuppelten Zustand entsprechenden Endstellung in die dem eingekuppelten Zustand entsprechende Endstellung eine den Anschlagstift in die Mündung leitende Führung bilden. Bei der axialen Verstellung des Sperrings in den eingekuppelten Zustand braucht dann der Drehstellung des Sperrings keine Beachtung mehr geschenkt zu werden, denn dabei dreht sich der Sperring dank der Führungsflächen selbsttätig in die den Durchtritt des Anschlagstifts durch die Mündung gestattende Drehstellung. Im einzelnen sind dabei die Verhältnisse zweckmäßigerweise so gewählt, daß bei in der Mündung stehendem Anschlagstift der Sperring sich an dem in der nachspannenden Drehrichtung hinteren Ende seines Drehweges befindet und die Zahnkränze voneinander ausgekuppelt sind.

Damit auch das Auskuppeln des Sperrings in jeder Drehstellung möglich ist, der Sperring also zum Auskuppeln nicht jeweils an den Anfang seines Drehweges zurückgedreht werden muß, ist als weiter bevorzugte Ausführungsform vorgesehen, daß die Aussparung sich von der Mündung aus in Umfangsrichtung gleich weit wie die Ausnehmung erstreckt und von dieser durch eine zur Mündung vorspringende Nase getrennt ist, und daß der Anschlagstift in seiner Längsrichtung verschiebbar geführt ist und sein Kopf und/oder zumindest die die Ausnehmung auf der Seite der Nase axial begrenzende Randfläche mit Anlaufschrägen versehen sind, wobei der Anschlagstift von der Nase über die Anlaufschrägen gegen die Kraft einer Feder aus der Ausnehmung zurückgedrückt wird und in die Aussparung wieder vorspringt, wenn der Sperring axial aus der dem eingekuppelten Zustand entsprechenden Endstellung in die dem ausgekuppelten Zustand entsprechende Endstellung verschoben wird und dabei der Anschlagstift im zurückgedrückten Zustand die Nase passiert. Der Sperring kann also von der Spannhülse entkuppelt werden, ohne daß zuvor das Bohrfutter gelöst werden muß.

Im Ergbnis kann der Sperring in jeder seiner möglichen Drehstellungen ohne weiteres axial von Hand verschoben werden. Geschieht dies aus der dem eingekuppelten Zustand entsprechenden axialen Endstellung heraus, so passiert der Anschlagstift entweder die Mündung oder in vorübergehend zurückgedrückter Stellung die Nase, um in die Aussparung zu gelangen. Wird umgekehrt der Sperring aus seiner dem ausgekuppelten Zustand entsprechenden Endstellung axial verschoben, so besorgen die Führungsflächen selbsttätig die für den Durchtritt des Anschlagstiftes durch die Mündung richtige Drehverstellung des Sperrings. Der Sperring verlangt daher eine Betätigung von Hand nur noch in axialer Richtung, was die Bedienung des Bohrfutters sehr vereinfacht und erleichtert.

Es empfiehlt sich, daß von den Führungsflächen der Aussparung die an der Nase verlaufende Führungsfläche unter einem die Selbsthemmung des Anschlagstifts an der Nase ausschließenden Winkel gegen die Bohrfutterachse geneigt ist und die gegenüber liegende Führungsfläche etwa parallel zur Futterachse verläuft. Zweckmäßig verläuft die nasenseitige Führungsfläche unter etwa 45° gegen die Bohrfutterachse.

Der Anschlagstift kann einen kreiszylindrischen und zum Ende hin sich kegelstumpfartig verjüngenden Kopf aufweisen, wobei die kegelstumpfartige Verjüngung die Anlaufschräge am Anschlagstift bildet.

Eine weiter bevorzugte Ausführungsform der Erfindung ist dadurch gekennzeichnet, daß zwischen dem Sperring und dem Futterkörper eine Rasteinrichtung wirksam ist, die den Sperring in seinen dem eingekuppelten und dem ausgekuppelten Zustand entsprechenden beiden axialen Endstellungen in jeweils einem Rastsitz festhält, der die Verdrehung des Sperrings gegenüber dem Futterkörper unbehindert läßt. Dann braucht der Sperring zu seiner Betätigung nur noch zwischen den beiden Rastsitzen hin und her verschoben zu werden.

Durch die zwangsweise richtige Dreheinstellung des Sperrings zu Beginn des Nachspannvorgangs kann bei dem erfindungsgemäßen Bohrfutter der Sperring in der nachspannenden Drehrichtung unter der Kraft einer Nachspannfeder stehen, ohne daß damit die eingangs behandelte Gefahr einer Verkürzung des Nachspannweges verbunden wäre.

Besitzt der Futterkörper einen mehrteiligen, aus Spanngewindeteil und Spindelanschlußteil zusammengesetzten Aufbau, wie dies in der zum nicht vorveröffentlichten Stand der Technik (gemäß Art. 54(3) EPÜ) gehörenden EP-A-0 370 159 beschrieben ist, so sind die Spannhülse und der Sperring vorzugsweise am Spanngewindeteil des Futterkörpers geführt.

Im folgenden wird die Erfindung an in der Zeichnung dargestellten Ausführungsbeispielen näher erläutert; es zeigen:

Fig. 1 ein nachspannendes Bohrfutter nach der Erfindung, teils in Seitenansicht, teils im Axialschnitt,

Fig. 2 eine teilweise Abwicklung des Bohrfutters nach Fig. 1 an der dort eingetragenen Linie II - II, wobei Fig. 1 dem in Fig. 2 eingetragenen Schnitt längs der Linie I - I entspricht,

Fig. 3 den Gegenstand der Fig. 2 in einer Zwischenstellung des Sperrings,

Fig. 4 den Schnitt längs der Linie IV - IV in Fig. 3,

Fig. 5 eine andere Ausführungsform des Bohrfutters in einer der Fig. 1 entsprechenden Darstellung,

Fig. 6 den Schnitt längs der Linie VI - VI in Fig. 5,

Fig. 7 eine dritte Ausführungsform des erfindungsgemäßen Bohrfutters in einer den Fig. 1 und 5 entsprechenden Darstellung, und

Fig. 8 den Schnitt längs der Linie VIII - VIII in Fig. 7.

Die aus der Zeichnung ersichtlichen Bohrfutter sind zum Betrieb an einer nicht dargestellten Bohrspindel bestimmt, die entweder einteilig als zugleich die drehende wie auch die schlagende Bewegung ausführende Schlagbohrspindel oder als zweiteilige Hammerbohrspindel aus einem drehenden Spindelteil in Form einer Hohlwelle und einem schlagenden Spindelteil in Form eines in der Hohlwelle axial verschiebbaren Döppers ausgebildet sein kann. Der Futterkörper 1 ist aus einem Spindelanschlußteil 1.1 und einem Spanngewindeteil 1.2 zusammengesetzt. Beide Teile 1.1, 1.2 stehen über Mitnahmeelemente 2, nämlich im Ausführungsbeispiel in Taschen bzw. Öffnungen eingelegte Kugeln, in drehschlüssiger Verbindung miteinander. Der Spindelanschlußteil 1.1 des Futterkörpers 1 besitzt eine Gewindeaufnahme 3 für die Bohrspindel und einen zentralen axialen Durchgang 4, durch den hindurch die Schlagbewegungen des Döppers unmittelbar auf ein in das Bohrfutter eingesetztes, in der Zeichnung nicht dargestelltes Bohrwerkzeug übertragen werden können. Am Spanngewindeteil 1.2 des Futterkörpers 1 ist drehbar und axial unverschiebbar eine Spannhülse 5 geführt, die schräg zur Futterachse 6 verlaufende Führungsbohrungen 7 für drei im wesentlichen zylindrische Spannbacken 8 aufweist, die zwischen sich eine in der Zeichnung geschlossen dargestellte Aufnahme für das Bohrwerkzeug bilden. Zur Verstellung besitzen die Spannbacken 8 eine sich in ihrer Längsrichtung erstreckende Zahnreihe 9, deren Zähne im Eingriff mit einem Spanngewinde 10 stehen, das an einer kegeligen Fläche des Spanngewindeteils 1.2 vorgesehen ist. Die Spannhülse 5 ist axial über ein Kugellager 11 am Spanngewindeteil 1.2 des Futterkörpers 1 kraftschlüssig abgestützt. Wird die Spannhülse 5 relativ zum Spanngewindeteil 1.2 des Futterkörpers 1 verdreht, verschieben sich die Spannbacken 8 in ihren Führungen 7 in der Spannhülse 5, und zwar je nach Drehrichtung der Spannhülse 5 im Sinne eines Öffnens oder Schließens des Bohrfutters. Eine solche Verdrehung im Sinne eines Schließens des Bohrfutters bewirken insbesondere die beim Bohrvorgang durch den Bohrwiderstand am Werkstück auf das Bohrwerkzeug ausgeübten und von ihm über die Spannbacken 8 auf die Spannhülse 5 übertragenen Drehmomente, die somit eine Selbst- und Nachspannung des Bohrfutters ergeben, wobei die kraftschlüssige Abstützung durch das Kugellager 11 dazu dient, die sich bei der Spannung der Spannbacken 8 ergebende Reaktionskraft auf das Spanngewindeteil 1.2 gegen die Spannhülse 5 abzufangen, so daß sich der aus den Spannkräften ergebende Kraftfluß zwischen dem Spanngewindeteil 1.2 und der Spannhülse 5 schließen kann. Diese Nachspannwirkung tritt in gleicher Weise auf, wenn der Futterkörper einteilig ausgebildet ist, was in der Zeichnung aber nicht dargestellt ist. Jedoch gilt die nachfolgend beschriebene Nachspannbegrenzung in gleicher Weise selbstverständlich auch für Bohrfutter mit einteilig ausgebildetem Futterkörper.

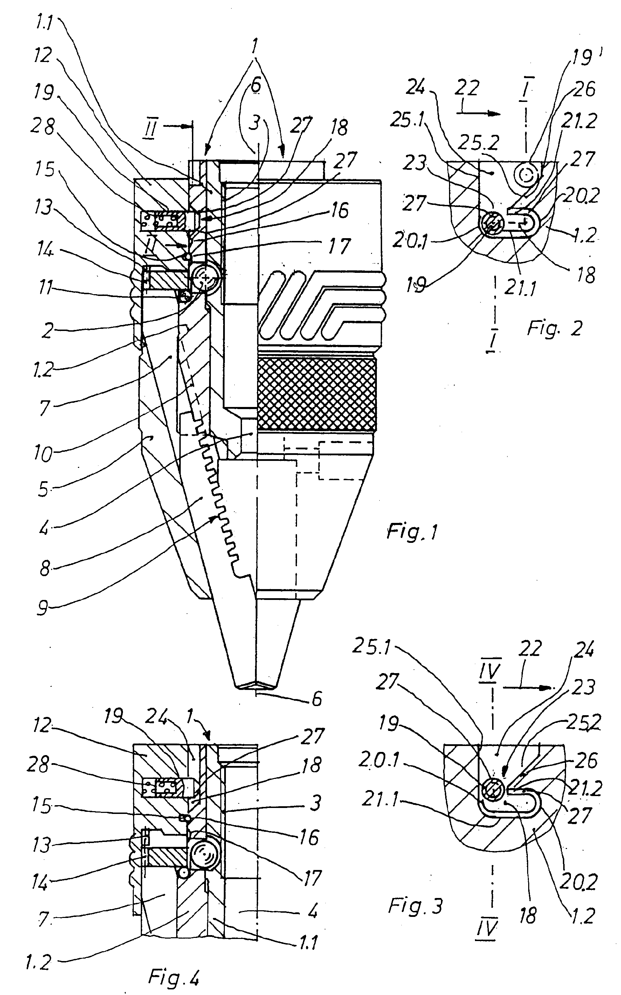

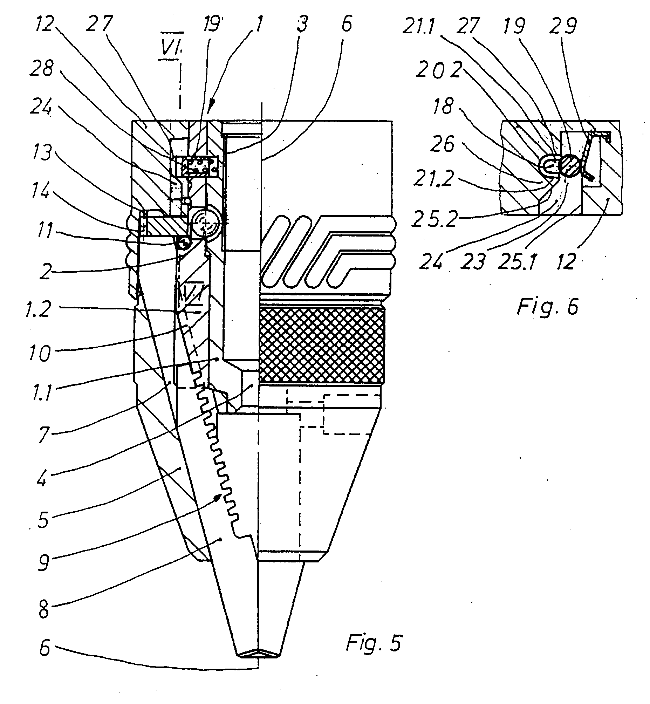

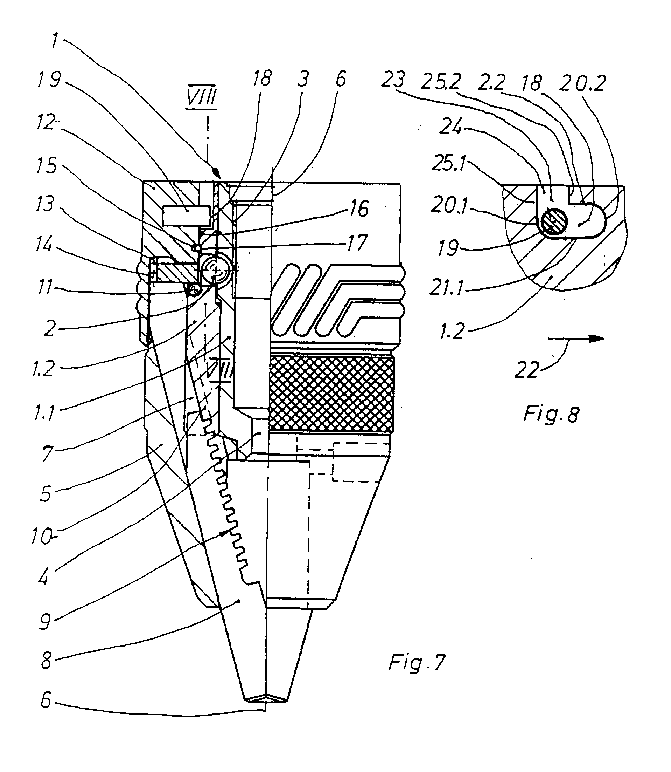

Zur Begrenzung der Nachspannung ist ein Sperring 12 vorgesehen, der am Spanngewindeteil 1.2 des Futterkörpers 1 jeweils zwischen zwei Endstellungen verdrehbar und axial verschiebbar angeordnet ist. Dabei ist der Sperring 12 mit der Spannhülse 5 in Umfangsrichtung über zwei Zahnkränze 13, 14 kuppelbar, die in der dem eingekuppelten Zustand entsprechenden axialen Endstellung des Sperrings 12 miteinander im Eingriff stehen, wie dies die Fig. 1, 5 und 7 zeigen. In der anderen, aus Fig. 4 ersichtlichen axialen Endstellung des Sperrings 12 ist der Eingriff zwischen den beiden Zahnkränzen 13, 14 aufgehoben. Zwischen dem Sperring 12 und dem Spanngewindeteil 1.2 des Futterkörpers 1 ist eine Rasteinrichtung wirksam, deren Rastfeder 15 den Sperring 12 in seinen dem eingekuppelten Zustand und dem ausgekuppelten Zustand entsprechenden beiden axialen Endstellungen in jeweils einem Rastsitz 16, 17 festhält, der als Ringnut am Spanngewindeteil 1.2 ausgebildet ist und daher die Verdrehung des Sperrings 12 gegenüber dem Futterkörper 1 unbehindert läßt. In Umfangsrichtung werden die beiden Endstellungen des Sperrings 12 durch eine Ausnehmung 18 und einen in die Ausnehmung 18 greifenden Anschlagstift 19 gebildet, wobei der radial abstehende Anschlagstift 19 wahlweise am Sperring 12 oder an dem Spanngewindeteil 1.2 des Futterkörpers 1 und umgekehrt die Ausnehmung 18 am Spanngewindeteil 1.2 oder am Sperring 12 vorgesehen sein kann. Im Ausführungsbeispiel nach den Fig. 1 und 7 befindet sich der Anschlagstift 19 am Sperring 12, im Ausführungsbeispiel nach Fig. 5 am Futterkörper 1. In jedem Fall ist die Ausnehmung 18 in Umfangsrichtung größer als die Dicke des Anschlagstiftes 19 und die Enden der Ausnehmung 18 bilden in Umfangsrichtung Anschlagflächen 20.1, 20.2 für den Anschlagstift 19, wodurch die Verdrehung des Sperrings 12 im wesentlichen auf die Länge der Ausnehmung 18 in Umfangrichtung begrenzt wird. Befindet sich der Anschlagstift 19 in der Ausnehmung 18, so hält er durch Anschlag an den die Ausnehmung 18 axial begrenzenden Randflächen 21.1, 21.2 den Sperring 12 bei seiner Drehung in der dem eingekuppelten Zustand entsprechenden axialen Endstellung fest. Die Ausnehmung 18 schließt an ihrem in der nachspannenden Drehrichtung (Pfeil 22) des Sperrings 12 hinteren Ende 20.1 mit einer axial gerichteten Mündung 23 an eine zur Aufnahme des Anschlagstifts 19 eingerichtete Aussparung 24. Die Mündung 23 gibt den axialen Übertritt des Anschlagstiftes 19 zwischen diesem Ende 20.1 der Ausnehmung 18 und der Aussparung 24 frei. Steht der Anschlagstift 19 in der Mündung 23 bzw. der Aussparung 24, so ist die axiale Verstellung des Sperrings 12 zwischen seinen dem eingekuppelten und dem ausgekuppelten Zustand entsprechenden beiden axialen Endstellungen möglich. In den Fig. 1 und 2 sowie 5 bis 8 befindet sich der Anschlagstift 19 am mündungsseitigen Ende 20.1 in der Ausnehmung 18, in den Fig. 3 und 4 in der Mündung 23 selbst. Im ersten Fall (Fig. 1, 2, 5, 6, 7 und 8) stehen die beiden Zahnkränze 13, 14 miteinander im Eingriff, im zweiten Fall (Fig. 3, 4) sind die beiden Zahnkränze 13, 14 voneinander entkuppelt.

Die Aussparung 24 ist mit sich in Umfangsrichtung gegenüberliegenden Führungsflächen 25.1, 25.2 versehen, die beim axialen Verstellen des Sperrings 12 aus der dem ausgekuppelten Zustand entsprechenden Endstellung in die dem eingekuppelten Zustand entsprechende Endstellung eine den Anschlagstift 19 in die Mündung 23 hinein leitende Führung bilden. Diese Führung hat zur Folge, daß sich der Sperring 12 beim axialen Verschieben in die dem eingekuppelten Zustand entsprechende Endstellung selbsttätig in die für den Durchtritt des Anschlagstiftes 19 durch die Mündung 23 richtige Drehstellung einstellt.

Im Ausführungsbeispiel nach den Fig. 7 und 8 ist ein Entkuppeln des Sperrings 12 von der Spannhülse 5 nur möglich, wenn der Sperring 12 mit der Spannhülse 5 zunächst in dem die Öffnung des Futters bewirkenden Sinne (also entgegengesetzt zum Pfeil 22) soweit verdreht wird, daß der Anschlagstift 19 an das mündungsseitige Ende 20.1 der Ausnehmung 18 gelangt. Erst dann kann der Sperring 12 in seine dem entkuppelten Zustand entsprechende axiale Endstellung verschoben werden. In den Ausführungsformen nach den Fig. 1 bis 6 kann dagegen der Sperring 12 in jeder Stellung seines Drehweges von der Spannhülse 5 entkuppelt werden, so daß ein vorheriges Öffnen des Bohrfutters nicht erforderlich ist. Dazu erstreckt sich die Aussparung 24 von der Mündung 23 aus in Umfangsrichtung (Pfeil 22) gleich weit wie die Ausnehmung 18. Die Aussparung 24 ist von der Ausnehmung 18 durch eine zur Mündung 23 vorspringende Nase 26 getrennt. Der Anschlagstift 19 ist in seiner Längsrichtung verschiebbar geführt und sein Kopf und die die Ausnehmung 18 begrenzenden Randflächen 21.1, 21.2 sind mit Anlaufschrägen 27 versehen. Das hat zur Folge, daß der in der Ausnehmung 18 stehende Anschlagstift 19 von der Nase 26 über die Anlaufschrägen 27 gegen die Kraft einer Feder 28 aus der Ausnehmung 18 zurückgedrückt wird und in die Aussparung 24 wieder vorspringt, wenn der Sperring 12 axial aus der dem eingekuppelten Zustand entsprechenden Endstellung in die dem ausgekuppelten Zustand entsprechende Endstellung verschoben wird und dabei der Anschlagstift 19 im zurückgedrückten Zustand die Nase 26 passiert. In Fig. 2 ist bei 19' die Stellung des Anschlagstiftes gestrichelt gezeigt, die er in der Aussparung 24 einnimmt, wenn der Sperring 12 am Ende seines nachspannenden Drehweges durch axiale Verstellung von der Spannhülse 5 entkuppelt worden ist und die dem entkuppelten Zustand entsprechende axiale Endstellung eingenommen hat. Soll aus diesem Zustand der Sperrring 12 wieder in die dem eingekuppelten Zustand entsprechende Endstellung verstellt werden, genügt eine rein axiale Betätigung des Sperrings 12, der dabei durch den Anschlag des Anschlagstiftes 19 an der nasenseitigen Führungsfläche 25.2 selbsttätig entgegen der Nachspannrichtung (Pfeil 22) so verdreht wird, daß der Anschlagstift 19 wieder entsprechend Fig. 3 durch die Mündung 23 in die Ausnehmung 18 eintreten kann. Dazu ist die an der Nase 26 verlaufende Führungsfläche 25.2 unter einem die Selbsthemmung des Anschlagstiftes 19 an der Nase 26 ausschließenden Winkel, im Ausführungsbeispiel 45°, gegen die Bohrfutterachse 6 geneigt. Die gegenüber liegende Führungsfläche 25.1 verläuft etwa parallel zur Bohrfutterachse 6.

Im Ausführungsbeispiel nach den Fig. 5 und 6 ist eine Nachspannfeder 29 vorgesehen, die am Anschlagstift 19 abgestützt ist und den Sperring 12 im nachspannenden Drehsinn belastet.

**Patentansprüche**

1. Nachspannendes Bohrfutter mit einem zum Anschluß an eine Bohrspindel, insbesondere Hammerbohrspindel, eingerichteten, ein Spanngewinde (10) aufweisenden Futterkörper (1) einer am Futterkörper (1) drehbar geführten Spannhülse (5), ferner mit im Bohrfutter axial abgestützten Spannbacken (8), die zwischen sich eine mit der Futterachse (6) koaxiale Aufnahme für den Werkzeugschaft bilden und an der Spannhülse (5) schräg zur Futterachse (6) verschiebbar geführt sind, so daß sie sich bei ihrer Verschiebung auch radial zur Futterachse (6) verstellen und den Durchmesser der Aufnahme für den Werkzeugschaft verändern, mit einem Sperring (12), der am Futterkörper (1) jeweils zwischen zwei Endstellungen in Umfangsrichtung verdrehbar und axial verschiebbar und mit der Spannhülse (5) in Umfangsrichtung über zwei Zahnkränze (13, 14) kuppelbar ist, die in der dem eingekuppelten Zustand entsprechenden axialen Endstellung des Sperrings (12) miteinander im Eingriff stehen, und mit einem zur Drehbegrenzung des Sperrings (12) gegenüber dem Futterkörper (1) in einem dieser beiden Teile (1, 12) angeordneten radial abstehenden Anschlagstift (19), der in eine im anderen Teil vorgesehene Ausnehmung (18) greift, die in Umfangsrichtung größer als die Dicke des Anschlagstifts (19) ist und deren Enden in Umfangsrichtung Anschlagflächen (20.1, 20.2) für den Anschlagstift (19) bilden, dadurch gekennzeichnet, daß der in der Ausnehmung (18) stehende Anschlagstift (19) durch Anschlag an den die Ausnehmung axial begrenzenden Randflächen (21.1, 21.2) den Sperring (12) bei seiner Drehung in der dem eingekuppelten Zustand entsprechenden axialen Endstellung hält, und daß die Ausnehmung (18) an ihrem in der nachspannenden Drehrichtung des Sperrings (12) hinteren Ende (20.1) mit einer axial gerichteten Mündung (23) an eine zur Aufnahme des Anschlagstifts (19) eingerichtete Aussparung (24) anschließt, wobei die Mündung (23) den axialen Übertritt des Anschlagstiftes (19) zwischen diesem Ende der Ausnehmung (18) und der Aussparung (24) freigibt und die Aussparung (24) die axiale Verstellung des Sperrings (12) zwischen seinen dem eingekuppelten und dem ausgekuppelten Zustand entsprechenden axialen Endstellungen ermöglicht.

2.  Bohrfutter nach Anspruch 1, dadurch gekennzeichnet, daß die Aussparung (24) sich in Umfangsrichtung gegenüber liegende Führungsflächen (25.1, 25.2) besitzt, die beim axialen Verstellen des Sperrings (12) aus der dem ausgekuppelten Zustand entsprechenden Endstellung in die dem eingekuppelten Zustand entsprechende Endstellung eine den Anschlagstift (19) in die Mündung (23) leitende Führung bilden.

3.  Bohrfutter nach Anspruch 1 oder 2, dadurch gekennzeichnet, daß bei in der Mündung (23) stehendem Anschlagstift (19) der Sperrring (12) sich an dem in der nachspannenden Drehrichtung hinteren Ende seines Drehweges befindet und die Zahnkränze (13, 14) voneinander ausgekuppelt sind.

4.  Bohrfutter nach einem der Ansprüche 1 bis 3, dadurch gekennzeichnet, daß die Aussparung (24) sich von der Mündung (23) aus in Umfangsrichtung gleichweit wie die Ausnehmung (18) erstreckt und von dieser durch eine zur Mündung (23) vorspringende Nase (26) getrennt ist, und daß der Anschlagstift (19) in seiner Längsrichtung verschiebbar geführt ist und sein Kopf und/oder zumindest die die Ausnehmung (18) auf der Seite der Nase (26) axial begrenzende Randfläche (21.2) mit Anlaufschrägen (27) versehen sind, wobei der Anschlagstift (19) von der Nase (26) über die Anlaufschrägen (27) gegen die Kraft einer Feder (28) aus der Ausnehmung (18) zurückgedrückt wird und in die Aussparung (24) wieder vorspringt, wenn der Sperring (12) axial aus der dem eingekuppelten Zustand entsprechenden Endstellung in die dem ausgekuppelten Zustand entsprechende Endstellung verschoben wird und dabei der Anschlagstift (19) im zurückgedrückten Zustand die Nase (26) passiert.

5.  Bohrfutter nach den Ansprüchen 2 bis 4, dadurch gekennzeichnet, daß von den Führungsflächen (25.1, 25.2) der Aussparung (24) die an der Nase (26) verlaufende Führungsfläche (25.2) unter einem die Selbsthemmung des Anschlagstiftes (19) und der Nase (26) ausschließenden Winkel gegen die Bohrfutterachse (6) geneigt ist und die gegenüber liegende Führungsfläche (25.1) etwa parallel zur Bohrfutterachse (6) verläuft.

6.  Bohrfutter nach Anspruch 5, dadurch gekennzeichnet, daß die nasenseitige Führungsfläche (25.2) unter etwa 45° gegen die Bohrfutterachse (6) verläuft.

7.  Bohrfutter nach einem der Ansprüche 4 bis 6, dadurch gekennzeichnet, daß der Anschlagstift (19) einen kreiszylindrischen und zum Ende hin sich kegelstumpfartig verjüngenden Kopf aufweist.

8.  Bohrfutter nach einem der Ansprüche 1 bis 7, dadurch gekennzeichnet, daß zwischen dem Sperring (12) und dem Futterkörper (1) eine Rasteinrichtung wirksam ist, die den Sperring (12) in seinen dem eingekuppelten und dem ausgekuppelten Zustand entsprechenden beiden axialen Endstellungen in jeweils einem Rastsitz (16, 17) festhält, der die Verdrehung des Sperrings (12) gegenüber dem Futterkörper (1) unbehindert läßt.

9.  Bohrfutter nach einem der Ansprüche 1 bis 8, dadurch gekennzeichnet, daß der Sperring (12) in der nachspannenden Drehrichtung unter der Kraft einer Nachspannfeder (29) steht.

10. Bohrfutter nach einem der Ansprüche 1 bis 9, dadurch gekennzeichnet, daß bei einem mehrteilig aus Spanngewindeteil (1.2) und Spindelanschlußteil (1.1) zusammengesetzten Futterkörper (1) die Spannhülse (5) und der Sperring (12) am Spanngewindeteil (1.2) geführt sind.

**Claims**

1. Tightening drill chuck with a clamping body (1) of a clamping sleeve (5) rotatably guided on the clamping body (1) adapted for connection to a drill spindle, in particular hammer drill spindle, and having a clamping thread (10), and with clamping jaws (8) supported axially in the drill chuck, which clamping jaws between them form a seat for the took shank, coaxial to the chuck axis (6), and are guided slidably on the clamping sleeve (5) obliquely to the chuck axis (6), so that as they are displaced they also move radially relative to the chuck axis (6) and change the diameter of the seat for the tool shank, with a locking ring (12), which is rotatable in the circumferential direction and is axially displaceable on the clamping body (1) between two respective end positions and can be coupled to the clamping sleeve (5) in the circumferential direction via two toothed rims (13, 14), which mutually engage in the axial end position of the locking ring (12) corresponding to the engaged state, and with a stop pin (19) projecting radially and mounted in one of these two parts (1, 12) in order to limit rotation of the locking ring (12) relative to the clamping body (1), which stop pin (19) engages in a recess (18) provided in the other part, which is larger in the circumferential direction than the thickness of the stop pin (19) and whose ends in the circumferential direction form stop faces (20.1, 20.2) for the stop pin (19), characterised in that the stop pin (19) located in the recess (18), by stopping against the edge faces (21.1, 21.2) axially defining the recess, holds the locking ring (12) in the axial end position corresponding to the engaged state, and in that an axially oriented opening (23) of the recess (18) joins, at its rear end (20.1) in the tightening direction of rotation of the locking ring (12), a recess (24) adapted to receive the stop pin (19), in which case the opening (23) frees the axial transition of the stop pin (19) between this end of the recess (18) and the recess (24), and the recess (24) permits axial displacement of the locking ring (12) between its axial end positions corresponding to the engaged and disengaged state.

2. Drill chuck according to claim 1, characterised in that the recess (24) has guide faces (25.1, 25.2) which oppose one another in the circumferential direction and which upon axial displacement of the locking ring (12) from the end position corresponding to the disengaged state into the end position corresponding to the engaged state form a guide conducting the stop pin (19) into the opening (23).

3. Drill chuck according to claim 1 or 2, characterised in that when the stop pin (19) is engaged in the opening (23), the locking ring (12) is located at the rear end of its rotary path in the tightening direction of rotation and the toothed rims (13, 14) are disengaged from one another.

4. Drill chuck according to one of claims 1 to 3, characterised in that the recess (24) extends from the opening (23) in the circumferential direction the same distance as the recess (18) and is separated from the latter by a lug (26) projecting relative to the opening (23), and in that the stop pin (19) is slidably guided in its longitudinal direction and its head and/or at least the edge face (21.2) axially limiting the recess (18) on the side of the lug (26) are provided with stop slopes (27), in which case the stop pin (19) is pressed back from the lug (26) out of the recess (18) via the stop slopes (27) against the force of a spring (28) and springs back into the recess (24) if the locking ring (12) is pushed axially out of the end position corresponding to the engaged state into the end position corresponding to disengaged state and thus the stop pin (19) passes over the lug (26) in the pressed-back state.

5. Drill chuck according to claims 2 to 4, characterised in that from the guide faces (25.1, 25.2) of the recess (24), the guide face (25.2) extending along the lug (26) is inclined towards the drill chuck axis (6) at an angle which excludes self-locking of the stop pin (19) and the opposite guide face (25.1) runs approximately parallel to the drill chuck axis (6).

6. Drill chuck according to claim 5, characterised in that the guide face (25.2) on the side associated with the lug extends at approximately 45° to the drill chuck axis (6).

7. Drill chuck according to one of claims 4 to 6, characterised in that the stop pin (19) has a circular cylindrical head tapering in a frustoconical manner towards the end.

8. Drill chuck according to one of claims 1 to 7, characterised in that a locking device is active between the locking ring (12) and the clamping body (1) and holds the locking ring (12) in its two axial end positions corresponding to the engaged and disengaged state in a respective snap fit (16, 17), which leaves the locking ring (12) free to rotate relative to the clamping body (1).

9. Drill chuck according to one of claims 1 to 8, characterised in that the locking ring (12) is held in the tightening position of rotation under the force of a chucking spring (29).

10. Drill chuck according to one of claims 1 to 9, characterised in that in the case of a clamping body (1) composed of more than one part and consisting of a clamping thread part (1.2) and a spindle connection part (1.1), the clamping sleeve (5) and the locking ring (12) are guided on the clamping thread part (1.2).

**Revendications**

1. - Mandrin de serrage autobloquant, comprenant un corps de mandrin (1) agencé pour le raccordement à une broche de perçage, en particulier à une broche de perçage d'un marteau perforateur, et muni d'un filetage de serrage (10), une douille de serrage (5) guidée de manière tournante sur le corps de mandrin (1), ainsi que de mâchoires de serrage (8) qui sont soutenues axialement dans le mandrin de serrage, forment entre elles, coaxialement à l'axe (6) du mandrin, un logement pour la tige d'outil et sont guidées sur la douille de serrage (5) de manière à pouvoir être déplacées en oblique par rapport à l'axe (6) du mandrin, de sorte que lors de leur déplacement, elles se déplacent également radialement à l'axe (6) du mandrin et modifient le diamètre du logement pour la tige d'outil, une bague d'arrêt (12) qui peut être tournée sur le corps de mandrin (1) dans le sens circonférentiel entre deux positions de fin de course, déplacée axialement et couplée avec la douille de serrage (5) dans le sens circonférentiel par l'intermédiaire de deux couronnes dentées (13, 14) lesquelles sont en prise l'une avec l'autre dans la position de fin de course axiale de la bague d'arrêt (12) correspondant à l'état de couplage, et un goujon d'arrêt (19) destiné à limiter la rotation de la bague d'arrêt (12) par rapport au corps de mandrin (1) et disposé en saillie radiale dans l'un de ces deux éléments (1, 12), qui s'engage dans un évidement (18) prévu dans l'autre élément, dont la dimension circonférentielle est plus grande que l'épaisseur du goujon d'arrêt (19) et dont les extrémités dans le sens circonférentiel forment des surfaces d'arrêt (20.1, 20.2) pour le goujon d'arrêt (19), **caractérisé en ce** que, du fait de sa venue en butée contre les surfaces latérales (21.1, 21.2) qui délimitent l'évidement dans le sens axial, le goujon d'arrêt (19) engagé dans l'évidement (18) maintient la bague d'arrêt (12) lors de sa rotation dans la position de fin de course axiale correspondant à l'état de couplage, et que l'extrémité (20.1) de l'évidement (18) postérieure dans le sens de rotation d'autoblocage de la bague d'arrêt (12) est raccordée, avec une bouche (23) orientée dans le sens axial, à une encoche (24) agencée pour la réception du goujon d'arrêt (19), la bouche (23) libérant le passage axial du goujon d'arrêt (19) entre ladite extrémité de l'évidement (18) et l'encoche (24) et l'encoche (24) permettant le déplacement axial de la bague d'arrêt (12) entre ses positions de fin de course axiales correspondant aux états de couplage et de découplage.

2. - Mandrin de serrage selon la revendication 1, caractérisé en ce que l'encoche (24) comporte des surfaces de guidage (25.1, 25.2) opposées dans le sens circonférentiel qui, lors du déplacement axial de la bague d'arrêt (12) de la position extrême correspondant à l'état de découplage à la position extrême correspondant à l'état de couplage, constituent un guidage qui dirige le goujon d'arrêt (19) dans la bouche (23).

3. - Mandrin de serrage selon l'une des revendications 1 ou 2, caractérisé en ce que, lorsque le goujon d'arrêt (19) est engagé dans la bouche (23), la bague d'arrêt (12) se trouve, vu dans le sens de rotation provoquant l'autoblocage, à l'extrémité postérieure de son parcours tournant et que les couronnes dentées (13, 14) sont découplées.

4. - Mandrin de serrage selon l'une des revendications 1 à 3, caractérisé en ce que l'encoche (24) s'étend à partir de la bouche (23) dans le sens circonférentiel sur la même distance que l'évidement (18) dont elle est séparée par un talon (26) faisant saillie en direction de la bouche (23), que le goujon d'arrêt (19) est guidé de façon à pouvoir se déplacer dans sa direction longitudinale et que sa tête et/ou au moins la surface latérale (21.2) qui limite axialement l'évidement (18) du côté du talon (26) sont munies de surfaces d'arrêt inclinées (27), le goujon d'arrêt (19) étant repoussé, par le talon (26) sur les surfaces d'arrêt inclinées (27), contre la force d'un ressort (28), hors de l'évidement (18) et dépassant à nouveau dans l'encoche (24) lorsque la bague d'arrêt (12) est amenée axialement de la position extrême correspondant à l'état de couplage à la position de fin de course correspondant à l'état de découplage et que ledit goujon d'arrêt (19) franchit alors le talon (26) dans la position repoussée.

5. - Mandrin de serrage selon l'une des revendications 2 à 4, caractérisé en ce que parmi les surfaces de guidage (25.1, 25.2) de l'encoche (24), la surface de guidage (25.2) qui s'étend sur le talon (26) est inclinée par rapport à l'axe (6) du mandrin de serrage sous un angle qui exclut l'autoblocage du goujon d'arrêt (19) sur le talon (26), et que la surface de guidage opposée (25.1) s'étend à peu près parallèlement à l'axe (6) du mandrin de serrage.

6. - Mandrin de serrage selon la revendication 5, caractérisé en ce que la surface de guidage (25.2) du côté du talon forme avec l'axe (6) du mandrin de serrage un angle d'environ 45°.

7. - Mandrin de serrage selon l'une des revendications 4 à 6, caractérisé en ce que le goujon d'arrêt (19) présente une tête cylindrique circulaire qui se rétrécit de manière tronconique en direction de l'extrémité.

8. - Mandrin de serrage selon l'une des revendications 1 à 7, caractérisé en ce qu'entre la bague d'arrêt (12) et le corps de mandrin (1) est prévu un dispositif à crans qui maintient la bague d'arrêt (12) dans ses deux positions de fin de course axiales correspondant aux états de couplage et de découplage, dans respectivement un crantage (16, 17) qui ne gêne pas la rotation de la bague d'arrêt (12) par rapport au corps de mandrin (1).

9. - Mandrin de serrage selon l'une des revendications 1 à 8, caractérisé en ce que, dans le sens de rotation correspondant à l'autoblocage, la bague d'arrêt (12) est soumise à la force d'un ressort de resserrage (29).

10. - Mandrin de serrage selon l'une des revendications 1 à 9, caractérisé en ce que, pour un corps de mandrin (1) en plusieurs pièces avec un élément fileté de serrage (1.2) et une broche de raccordement (1.1), la douille de serrage (5) et la bague d'arrêt (12) sont guidées sur l'élément fileté de serrage (1.2).

Fig. 1

Fig. 2

Fig. 3

Fig. 4

Fig. 5

Fig. 6

Fig.7

Fig.8